# EUROPÄISCHE PATENTSCHRIFT

(11) **EP 4 445 809 B1**
(45) Veröffentlichungstag und Bekanntmachung des Hinweises auf die Patenterteilung: **21.01.2026**
(21) Anmeldenummer: 24162131.7
(22) Anmeldetag: 07.03.2024
(51) Int. Cl.: A47J 31/36, A47J 31/42, A47J 31/44, A47J 31/52

(54) **VERFAHREN ZUM BETRIEB EINER GETRÄNKEZUBEREITUNGSVORRICHTUNG MIT EINER HYDRAULISCHEN VORVERDICHTUNGSEINHEIT ZUM VERDICHTEN EINES GETRÄNKESUBSTRATS**
METHOD FOR OPERATING A BEVERAGE PREPARATION DEVICE WITH A HYDRAULIC PRECOMPRESSION UNIT FOR COMPRESSING A BEVERAGE SUBSTRATE
PROCÉDÉ DE FONCTIONNEMENT D'UN DISPOSITIF DE PRÉPARATION DE BOISSONS DOTÉ D'UNE UNITÉ DE PRÉ-COMPRESSION HYDRAULIQUE POUR COMPRIMER UN SUBSTRAT DE BOISSON

(30) Priorität: 14.04.2023 DE 102023109443
(43) Veröffentlichungstag der Anmeldung: 16.10.2024
(73) Patentinhaber: Eugster/Frismag AG, 8580 Amriswil (CH)
(72) Erfinder: Riessbeck, Wolfgang, 8597 Landschlacht (CH); van de Löcht, Hendrik, 8586 Riedt bei Erlen (CH); Ala, Evzi, 8408 Winterthur (CH)
(74) Vertreter: Patent- und Rechtsanwälte Behrmann Wagner PartG mbB

(56) Entgegenhaltungen:
- EP-A1- 0 561 741
- EP-A1- 3 323 326
- DE-A1- 102021 123 545
- US-A1- 2014 150 663
- WIKIPEDIA: "Espresso", 22 March 2023 (2023-03-22), wikipedia.org, pages 1 - 14, XP093183856, Retrieved from the Internet <URL:https://de.wikipedia.org/w/index.php?title=Espresso&oldid=232075046> [retrieved on 20240709]

## Beschreibung

Die vorliegende Erfindung betrifft ein Verfahren nach dem Oberbegriff des Anspruchs 1.

Im Stand der Technik sind unterschiedliche Ausgestaltungen von Getränkezubereitungsvorrichtungen, insbesondere Kaffeemaschinen, bekannt. Grundsätzlich unterscheiden sich unterschiedliche Kategorien, wie beispielsweise Kapsel-Automat, Vollautomat, Siebträger-Maschine und dgl. Es sind aber auch hybride Konzepte oder Kombinationsansätze bekannt, die beispielsweise Aspekte eines Vollautomaten und Aspekte einer Siebträger-Maschine miteinander verbinden/vereinen.

Für viele Vorrichtungen, bei denen ein Getränkesubstrat, beispielsweise Kaffeebohnenmehl, zum Einsatz kommt, umfasst ein Vorbereitungsprozess zum Durchführen des Getränkeherstellungsprozesses oder zur Durchführung eines Getränkebezugs das Vorverdichten von Getränkesubstrat, insbesondere Kaffeebohnenmehl.

Das Vorverdichten des Getränkesubstrats dient dazu ein Getränk mit einer gleichbleibend hohen Qualität im Rahmen des an die Vorverdichtung anschließenden Aufbrüh- oder Auslaugprozesses zu erzielen. Dementsprechend wird angestrebt möglichst unabhängig von der Menge des jeweiligen Getränkesubstrats oder Kaffeebohnenmehl eine gleichbleibende Vorverdichtung zu erreichen.

Die Vorverdichtung wird u.a. auch als Tampen bezeichnet. Bei Getränkezubereitungsvorrichtungen ist der Automatisierungsgrad je nach Art und Ausgestaltung unterschiedlich. Es sind jedoch aus verschiedenen Konzepten oben genannten Kategorien der Getränkezubereitungsvorrichtung bereits Ansätze bekannt, bei denen, auch zur Verbesserung der Reproduzierbarkeit des Ergebnisses, das Tampen oder Vorverdichten des Getränkesubstrats automatisch oder automatisiert durchgeführt wird. Beispielsweise Vollautomaten mit einer Kniehebelbrüheinheit führen das Vorverdichten durch eine mechanische Verstellung einer beweglichen Brühkopfes in/gegen eine Brühkammer aus, in die das Getränkesubstrat eingefüllt wurde.

Neben mechanischen Systemen zum Vorverdichten des Getränkesubstrats sind auch bereits hydraulische Vorrichtungen und Verfahren bekannt, mit denen das Tampen oder Vorverdichten automatisiert und reproduzierbar durchgeführt werden soll. Ein solcher Ansatz ist beispielsweise aus dem Gebrauchsmuster DE 92 14 283 U1 bekannt. Auch die Patentanmeldung DE 10 2021 123 545 A1 der Anmelderin lehrt unterschiedliche Ansätze von Getränkezubereitungsvorrichtungen und entsprechenden Verfahren, bei denen ein mittels eines hydraulischen Systems ein Tampen von in einer Brühkammer oder in einem Siebträger angeordnetem Getränkesubstrat erfolgen kann. Aus dem Stand der Technik ist dabei bereits bekannt Brühfluid zum hydraulischen Vorverdichten zu verwenden und ein Hydraulikzylinder, der zum Vorverdichten benutzt wird so fluidtechnisch, insbesondere fluidleitend, mit der Brühkammer oder einem Brühkopf zu verbinden, insbesondere über ein Ventil schaltbar abzugrenzen, dass beim Erreichen eines vorgegebenen Innendrucks in dem Hydraulikzylinder und damit beim entsprechenden Erreichen eines Grenzdrucks an dem Ventil das Ventil geöffnet wird und das Brühfluid aus oder über den Hydraulikzylinder zur Vorverdichtung in die Brühkammer abfließen kann oder in die Brühkammer überführt werden kann.

Damit wird auf einfache und effektive Weise ein reproduzierbarer Anpressdruck beim Vorverdichten des Getränkesubstrats erreicht.

Aus der US 2014/0150663 A1 ist eine Espressomaschine bekannt, mit einer hydraulisch angetriebenen Tampervorrichtung, wobei die Höhe des gepressten Getränkesubstratpellets aus dem von einem Flowmeter erfassten Flüssigkeitsvolumen der Hydraulikflüssigkeit berechnet wird. Die somit errechnete tatsächliche Höhe des Getränkesubstratpellets wird von einer Steuereinrichtung mit einer gewollten Höhe verglichen und zur Anpassung der Mahlzeit bei folgenden Brühvorgängen verwendet.

Bei den bekannten Getränkezubereitungsvorrichtungen und Verfahren zu deren Betrieb, die eine entsprechende hydraulische Vorverdichtung des Getränkesubstrats vorsehen ist es jedoch nachteilig, dass der gesamte Getränkebezug, insbesondere vom Auslösen durch einen Benutzer bis zum Abschluss der Ausgabe des fertigen Getränks mitunter verhältnismäßig viel Zeit in Anspruch nimmt. Auch besteht zusätzlich ein Bedarf daran die erzeugten Getränke über einen möglichst langen Zeitraum möglichst mit reproduzierbaren Eigenschaften oder mit reproduzierbarer Qualität bereitzustellen und dabei gleichzeitig unterschiedliche Getränketypen, beispielsweise Espresso, Kaffe-Lungo, usw. bereitzustellen, bei denen zusätzlich, beispielsweise nach Benutzervorlieben, die Menge an Getränkesubstrat gezielt oder gewollt variiert werden kann.

Vor diesem Hintergrund besteht die Aufgabe der vorliegenden Erfindung darin ein Verfahren zum Betrieb einer Getränkezubereitungsvorrichtung, insbesondere einer Kaffeemaschine, mit einer hydraulischen Vorverdichtungseinheit zum Verdichten eines Getränkesubstrats vorzuschlagen, bei denen die Nachteile im Stand der Technik überwunden werden, und insbesondere ein schnellerer Bezug des fertigen Getränks und/oder eine Stabilisierung der Eigenschaften der Getränke über einen längeren Benutzungszeitraum hinweg verbessert wird.

Diese Aufgabe wird mit einem Verfahren mit den Merkmalen des Anspruchs 1 gelöst.

Vorteilhafte Ausgestaltungen des Verfahrens sind Gegenstand der nachfolgenden Beschreibung, der Figurenbeschreibung, der Figuren sowie der Unteransprüche.

Nachfolgend verfahrensmäßig offenbarte Merkmale sollen grundsätzlich auch als entsprechend vorrichtungsmäßig offenbart gelten und beanspruchbar sein.

Das Verfahren zum Betrieb einer Getränkezubereitungsvorrichtung, insbesondere einer Kaffeemaschine, mit einer hydraulischen Vorverdichtungseinheit zum Verdichten eines Getränkesubstrats, bevorzugt Kaffeebohnenmehl, vor einem Aufbrüh- oder Auslaugprozess mit einem Brühfluid, bevorzugt Wasser, bei dem während eines Vorverdichtungsverfahrens ein über einen hydraulischen Aktor, bevorzugt Hydraulikzylinder, betätigtes Verstellen eines Brühkopfes in Richtung und in eine Brühkammer oder Brühkammerhälfte oder Siebträger erfolgt sieht erfindungsgemäß vor, dass während des Vorverdichtungsverfahrens der Fluss oder die Flussrate eines Hydraulikfluids, insbesondere eines Brühfluids, zum hydraulischen Verstellen des Brühkopfes gemessen wird und in Abhängigkeit eines vorgegebenen Grenzwerts von dem gemessenen Fluss oder der gemessenen Flussrate eine Steuerung der Getränkezubereitungsvorrichtung angepasst oder verändert wird. Die Erfindung basiert damit auf der Grundidee, dass über einen Grenzwert des Flusses oder der Flussrate Rückschlüsse über den mit der Vorverdichtung initiierten Brühprozess und über vorherige Verfahrensschritte, wie beispielsweise einen Mahlprozess, gewonnen werden können, die dann genützt werden können, um insbesondere unabhängig von der Injektion oder Überführung des Brühfluids in die Brühkammer, den weiteren Brühprozess oder Auslaugprozess zu verbessern, insbesondere zu beschleunigen und die Brüh- oder Auslaugprozesse über eine längere Betriebsdauer oder Benutzungsdauer der Getränkezubereitungsvorrichtung konstant und reproduzierbar zu halten.

Das erfindungsgemäße Verfahren kann dabei besonders vorteilhaft ausnutzen, dass in gattungsgemäßen Vorrichtungen und bei gattungsgemäßen Verfahren ohnehin Mittel realisiert sind, beispielsweise Flowmeter, die es ermöglichen den Fluss und die Flussrate während dem hydraulischen Verstellen des Brühkopfes und während des stattfindenden Vorverdichten des Getränkesubstrats zu erfassen. Mit dem erfindungsgemäßen Verfahren wird dabei ermöglicht, dass nicht nur der Fluss oder die Flussrate erfasst oder gemessen wird, sondern auch abhängig von wenigstens einem vorgegebenen Grenzwert, der über den Fluss oder die Flussrate, wenigstens mittelbar, definiert wird, die Steuerung der Getränkezubereitungsvorrichtung angepasst oder verändert wird.

Mit anderen Worten ausgedrückt bedeutet dies, dass mit dem erfindungsgemäßen Verfahren nicht nur ein reproduzierbares Vorverdichten des Getränkesubstrats, insbesondere unabhängig von der Menge oder dem Volumen des Getränkesubstrats, erreicht werden kann, sondern dass darüber hinaus auch gerade in Abhängigkeit oder in Reaktion auf die aktuell verwendete Menge oder das aktuell verwendete Volumen von Getränkesubstrat, insbesondere Kaffeebohnenmehl, der aktuelle Brühprozess im Anschluss an die Vorverdichtung und die längerfristigen Wiederholungen von Brühprozessen angepasst werden können, um einzelne Brühprozesse schneller durchführen zu können und über eine längere Dauer der Benutzung der Getränkezubereitungsvorrichtung die einzelnen Brühprozesse mit hoher Reproduzierbarkeit ausführen zu können.

In dem Verfahren kann vorteilhaft eine Steuereinrichtung, beispielsweise eine zentrale Steuereinrichtung der Getränkezubereitungsvorrichtung zum Einsatz kommen, die Teile der Getränkezubereitungsvorrichtung oder die gesamte Getränkezubereitungsvorrichtung steuert oder mit entsprechenden Steuerungsbefehlen versorgt. Diese Steuereinheit kann bevorzugt mit entsprechenden Speichermitteln wirkverbunden sein, in denen Parameter, Profile, Grenzwerte und dgl. zur Steuerung der Getränkezubereitungsvorrichtung hinterlegt sind. Für die vorliegende Erfindung, insbesondere das erfindungsgemäße Verfahren kann besonders vorteilhaft vorgesehen sein, wenn die Steuereinrichtung dazu eingerichtet ist einen Fluss von Hydraulikfluid, insbesondere Brühfluid, zur hydraulischen Verstellung des Brühkopfes über den hydraulischen Aktor zu erfassen und auszuwerten, insbesondere mit vorgegebenen Grenzwerten, beispielsweise aus den Speichermitteln, zu vergleichen, um bei der Erkennung eines Erreichens, Überschreitens oder Unterschreitens von entsprechenden Grenzwerten Steuerbefehle zu ändern, Steuerparameter anzupassen und/oder die Steuerung der Getränkezubereitungsvorrichtung zu beeinflussen.

Gemäß einer ersten vorteilhaften Ausführungsform kann vorgesehen sein, dass der Grenzwert, in dessen Abhängigkeit die Steuerung der Getränkezubereitungsvorrichtung angepasst oder geändert wird, als Untergrenze für eine Flussrate oder einen Fluss definiert wird und bei der Unterschreitung der Untergrenze durch eine Flussrate oder Fluss zur hydraulischen Verstellung des Brühkopfes die Steuerung der Getränkezubereitungsvorrichtung angepasst oder verändert wird.

In der Regel werden die hydraulischen Aktoren, beispielsweise Hydraulikzylinder, zum Verstellen des Brühkopfes und Vorverdichten des Getränkesubstrats, beispielsweise in einer Brühkammer oder einem Siebträger, mit entsprechenden Hydraulikpumpen oder Fluidpumpen versorgt. Diese Pumpen oder die Kombinationen von Pumpen und Hydraulikaktoren, insbesondere Hydraulikzylinder, haben eine recht grundlegende Charakteristik, bei der der Fluss durch die Pumpe und/oder durch eine Zuleitung zu dem hydraulischen Aktor abnimmt, wenn in dem hydraulischen Aktor, insbesondere in dem Hydraulikzylinder der Innendruck, beispielsweise verursacht durch einen entsprechend entgegengerichteten Außendruck, ansteigt. Dies bedeutet, dass wenn der hydraulische verstellbare Brühkopf mit dem in der Brühkammer oder im Siebträger angeordneten Getränkesubstrat zur Anlage kommt und beim weiteren Verstellen des Brühkopfes die Vorverdichtung des Getränkesubstrats bewirkt ein zunehmender Gegendruck auf den hydraulischen Aktor ausgeübt wird, der wiederum zu einem entsprechenden Innendruck führt. Letzter wiederum führt dazu, dass der Fluss abnimmt oder die Flussrate die von der Pumpe geliefert oder gefördert wird verringert wird. Dieses charakteristische Verhalten des Flusses oder der Flussrate kann genutzt werden, um festzustellen, dass eine ausreichende Vorverdichtung erzielt wurde oder unmittelbar bevorsteht. Dadurch wiederum können weitere Aufschlüsse über den aktuellen Brüh- oder Vorverdichtungsprozess generiert oder berechnet werden, sodass beispielsweise auf die verwendete Menge von Getränkesubstrat, beispielsweise Kaffeebohnenmehl, rückgeschlossen werden kann.

Die erfasste oder ermittelte Menge oder Volumen an verwendetem Kaffeebohnenmehl kann jedoch sowohl für den aktuellen Brühvorgang als auch über eine längere Zeit und damit für eine Vielzahl von Brühvorgängen genutzt werden, um die Brühprozesse zu beschleunigen und reproduzierbar zu halten, wie nachfolgend noch im Detail beschrieben werden wird. Daher ist das Unterschreiten eines solchen Grenzwertes, der den Abschluss oder den baldigen Abschluss des Vorverdichtungsverfahrens erkennen lässt, und damit einen Rückschluss über die verwendete Menge oder das verwendete Volumen an Kaffeebohnenmehl erlaubt besonders nützlich um den jeweils aktuellen Brühvorgang, einen anschließenden Brühvorgang oder Brühprozess oder eine Reihe von vielen nachfolgenden Brühvorgängen zu optimieren.

In einer weiteren, besonders vorteilhaften Ausgestaltung des Verfahrens kann vorgesehen sein, dass der Grenzwert als Sattelpunkt in dem Fluss oder in der Flussrate definiert wird und beim Passieren des Sattelpunkts die Steuerung angepasst oder verändert wird. Der Sattelpunkt im Fluss oder in der Flussrate kann beispielsweise einen Moment darstellen, in dem nach erfolgreicher und abgeschlossener Vorverdichtung ein Ventil zwischen einem hydraulischen Aktor, insbesondere Hydraulikzylinder, zur Verstellung des Brühkopfes und einer Brühkammer oder einem in einen Siebträger eingetauchten Brühkopfes geöffnet wurde und dann nach der vorangehenden Abnahme des Flusses aufgrund der Druckzunahme (vgl.: oben) erneut der Fluss ansteigt, da auch der Druck im Inneren des Hydraulikzylinders wieder abnimmt oder zumindest nicht weiter ansteigt und gleichzeitig Flüssigkeit, bevorzugt zuvor als Hydraulikfluid verwendetes Brühfluid, abfließt.

In diesem Fall kann recht eindeutig über die Messung des Flusses das Ende des Vorverdichtungsprozesses und der Beginn eines Brühprozesses oder eines Auslaugvorgangs erkannt oder ermittelt werden. Dieser Erkennung eignet sich besonders gut, um Kenntnisse über die Vorverdichtung und den Brühprozess zu gewinnen oder zu generieren und auf Grund dessen die Steuerung anzupassen.

In einer weiteren, besonders bevorzugten Ausgestaltung des Verfahrens kann vorgesehen sein, dass in Reaktion auf das Unterschreiten oder Überschreiten des Grenzwertes eine Steuerung einer Brühfluidpumpe und/oder die Steuerung einer Heizeinrichtung für das Brühfluid geändert wird. Im Stand der Technik ist es bereits bekannt, dass für unterschiedliche Getränke unterschiedliche Brühprofile in einer entsprechenden Getränkezubereitungsvorrichtung, beispielsweise als Datensätze in den oben genannten Speichermitteln, hinterlegt sind, die dann von einer Steuervorrichtung aus einem entsprechenden verwendet werden und in Ansteuerungsbefehle oder Steuerimpulse umgewandelt werden, um die einzelnen Baugruppen und Komponenten der Getränkezubereitungsvorrichtung entsprechend anzusteuern.

Brühprofile können u.a. aber keinesfalls ausschließlich eine spezielle Ansteurung einer Brühfluidpumpe und/oder einer Heizeinrichtung für das Brühfluid umfassen. Mit dem erfindungsgemäßen Verfahren, welches über die Messung und den Vergleich des Flusses oder der Flussrate mit einem vorgegebenen Grenzwert den Fortschritt oder das Ende des Vorverdichtungsverfahrens erkennt oder ermittelt kann damit, in besonders vorteilhafter Weise unmittelbar im Anschluss an den Abschluss des Vorverdichtungsverfahrens, eine Ansteuerung der Komponenten, insbesondere der Heizeinrichtung und/oder der Brühfluidpumpe erfolgen, um diese gemäß einem gewünschten und vorgegebenen Brühprofil zu betreiben. Dadurch kann einerseits die Qualität des ausgegebenen Getränks verbessert werden und zudem kann die Bezugszeit für ein Getränk oder die Herstellungszeit für ein Getränk verringert werden, weil unmittelbar an das Erreichen eines gewünschten Vorverdichtungszustandes des Getränkesubstrats und gegebenenfalls gleichzeitig mit einer selbsttätigen oder automatischen Öffnung der Brühfluidzufuhr zu einer Brühkammer oder einem Siebträger das gewünschte Brühprofil abgerufen und ausgeführt werden kann. Je nach Definition des Grenzwertes kann die Initiierung eines Brühprofils unmittelbar oder vorgegeben zeitversetzt zur Erreichung des Grenzwertes durch den Fluss oder die Flussrate erfolgen.

Gemäß einer weiteren, besonders vorteilhaften Ausgestaltung des Verfahrens kann zudem vorgesehen, dass während des Vorverdichtungsverfahrens der Absolutwert des geflossenen Hydraulikfluids bis zum Erreichen des Grenzwertes oder die Zeit bis zum Erreichen des Grenzwertes gemessen wird. Dies bedeutet mit anderen Worten ausgedrückt, dass es nicht nur sinnvoll und vorteilhaft sein kann durch die Vorrichtung, insbesondere durch eine Steuereinrichtung den Moment zu identifizieren oder festzustellen, in dem der vorgegebenen Grenzwert unterschritten oder überschritten wird, sondern dass auch vorteilhaft sein kann den bis zu diesem Moment geflossenen Fluss an Hydraulikfluid und/oder den entsprechenden Zeitrahmen oder Zeitraum, von einer Initiierung der hydraulischen Verstellung des Prüfkopfes mit zu dem Feststellen der Überschreitung oder Unterschreitung des Grenzwertes zu ermitteln oder mitzuerfassen. Denn dadurch kann präzise und ohne zusätzliche Messtechnik besonders einfach auf die in der Brühkammer oder in dem Siebträger vorhandene Menge von Getränkesubstrat zurückgeschlossen werden. Dies wiederum erlaubt in vorteilhafter Weise weitere Optimierungen des Einzel-Brühvorgangs als auch die Optimierung eines Dauerbetriebes im Sinne von einer Vielzahl von über einen langen Zeitraum verteilt durchgeführten einzelnen Brühvorgängen.

Gemäß einer vorteilhaften Ausführungsform kann dabei vorgesehen sein, dass in Abhängigkeit des erfassten Absolutwerts der Menge oder des Volumens des Hydraulikfluids und/oder der gemessenen Zeit zur Erreichung des Grenzwertes die Steuerung einer Brühfluidpumpe und/oder die Steuerung einer Heizeinrichtung für das Brühfluid geändert oder angepasst wird. Dies bedeutet, dass die oben bereits thematisierten Brühprofile, die neben der Ansteuerung der Brühfluidpumpe und/oder einer Heizeinrichtung für das Brühfluid, beispielsweise ein Thermoblock, noch weitere Parameter und Steuerungsvorgaben enthalten können durch das erfindungsgemäße Verfahren nicht nur optimal, zeitsparend und qualitätssichernd gestartet werden können, sondern auch oder alternativ unter Berücksichtigung der verwendeten Getränkesubstratmenge angepasst und optimiert werden können.

So kann beispielsweise in Abhängigkeit von der festgestellten oder berechneten Menge an Getränkesubstrat, die über den Zeitpunkt oder den Absolutwert des Flusses des Hydraulikfluids bestimmt wird, ein Vorbrühen im Hinblick auf die Länge, Zuflussrate des Brühfluids und anschließende Unterbrechung der Brühfluidzufuhr in Abhängigkeit der Menge an Getränkesubstrat optimiert werden. Auch andere Teile oder Parameter eines Brühüprofils können in ähnlicher Weise angepasst und optimiert werden.

Gemäß einer weiteren, ebenfalls besonders wünschenswerten Ausprägung des Verfahrens, kann vorgesehen sein, dass in Abhängigkeit des Absolutwerts der Menge oder des Volumens des Hydraulikfluids und/oder der gemessenen Zeit zur Erreichung des Grenzwertes eine Steuerung von wenigstens einem Ventil, bevorzugt eines Entspannungsventils des hydraulisch verstellbaren Brühkopfes und/oder des hydraulischen Aktors, angepasst wird. Das Ende eines Getränkebezugs oder das Ende eines Brühvorgangs umfasst in der Regel ein Entwässern oder Entfeuchten des aufgebrühten oder ausgelaugten Getränkesubstrats der in diesem Zustand auch Trester genannt wird. Die Steuerung kann damit besonders vorteilhaft ebenfalls auf die Menge des Getränkesubstrats angepasst und abgestimmt werden, sodass insgesamt für die jeweilige Menge an Getränkesubstrat eine möglichst kurze aber gleichzeitig ausreichend lange Entwässerungsphase des Tresters vor dem Entspannen des hydraulisch verstellbaren Brühkopfes zur Entspannung und zur nachfolgenden Entnahme des Tresters oder zum Auswurf des Tresters eingehalten wird. Je nach Menge des Getränkesubstrats, insbesondere des Kaffeebohnenmehls, im Siebträger oder in der Brühkammer kann die Drainagezeit vor der Öffnung des Ventils zur Entspannung des hydraulisch verstellbaren Brühkopfes länger oder kürzer ausfallen. Bei kleineren Getränkesubstratmengen kann die Drainagezeit größer als bei größeren Getränkesubstratmengen sein. Damit wird die benötigte Zeit für jeden Brühvorgang oder Getränkebezug optimal an die verwendete oder vorhandene Menge an Getränkesubstrat angepasst und gleichzeitig die Entfeuchtung oder Entwässerung des Tresters optimiert.

In einer weiteren, besonders bevorzugten Variante des Verfahrens kann vorgesehen sein, dass in Abhängigkeit des Absolutwerts der Menge oder des Volumens des Hydraulikfluids und/oder der gemessenen Zeit zur Erreichung des Grenzwerts eine Steuerung einer Mahleinheit der Getränkezubereitungsvorrichtung oder einer datentechnisch verbundenen, externen Mahleinheit geändert wird. Sowohl bei sogenannten Kaffeevollautomaten als auch bei hybriden Getränkezubereitungsvorrichtungen, die beispielsweise einen entnehmbaren und wechselbaren Siebträger mit einem integrierten Mahlwerk oder einer integrierten Mahleinheit kombinieren, ist es für die langfristig gleichbleibende Qualität oder die langfristig gleichbleibenden Eigenschaften gewisser Getränke wichtig, dass die Mahleinheit bei jedem Bezug und/oder bei jeder Herstellung von Getränkesubstrat, beispielsweise beim Zermahlen von Kaffeebohnen zu Kaffeebohnenmehl, die gleiche oder die vorgegebene Menge an Getränkesubstrat erzeugt und/oder ausgibt. Dies gilt auch für Vorrichtungs- oder Maschinenkonzepte, bei denen zwischen einer Getränkezubereitungsvorrichtung und einer externen Mahleinheit eine datentechnische Verbindung, zum Beispiel über WLAN, Bluetooth^{®}, NFC oder dergleichen, hergestellt wird und eine Kommunikation und eine gegenseitige Beeinflussung ermöglicht ist.

Doch aufgrund von unterschiedlichen Sorten von Substratvorstufen, insbesondere Kaffeebohnen, und aufgrund von Verschleiß, Abnutzung oder unbeabsichtigte Verstellung der Mahleinheit, beispielsweise durch Vibrationen, Erschütterungen od. dgl., kann es dazu kommen, dass die Mahleinheit über die Zeit bei der tatsächlich abgegebenen Menge von Getränkesubstrat (Ist-Menge) von einer vorgegebenen oder gewünschten Menge an Getränkesubstrat (Soll-Menge) abweicht. Um dieses Problem zu beheben ist in einer weiteren, besonders vorteilhaften Ausführungsform des erfindungsgemäßen Verfahrens vorgesehen, dass in Abhängigkeit des Absolutwerts der Menge/Volumen des Hydraulikfluids und/oder der gemessenen Zeit zur Erreichung des Grenzwerts eine Steuerung einer Mahleinheit der Getränkezubereitungsvorrichtung oder einer datentechnisch verbundenen, externen Mahleinheit geändert wird. In erster Linie kann über den Absolutwert der Menge oder des Volumens des in dem hydraulischen Aktor geförderten Hydraulikfluids, insbesondere Brühfluids, wie oben bereits ausgeführt, direkt oder zumindest indirekt auf die Menge des in der Brühkammer oder einem Siebträger vorhandenen Getränkesubstrats geschlossen werden. Diese Menge kann, beispielsweise von einer zentralen Steuereinrichtung, mit der Menge verglichen werden, die die Mahleinheit bei dem vom Benutzer gewählten oder angeforderten Produkt/Getränk hergestellt und/oder ausgegeben werden soll. Wenn eine Abweichung zwischen der tatsächlich vorhandenen Menge an Getränkesubstrat und der vorgegebenen oder gewünschten Menge an Getränkesubstrat identifiziert wird, die eine vorgegebene Toleranzschwelle, wie beispielsweise 5%, übersteigt, kann mit dem erfindungsgemäßen Verfahren, bevorzugt abermals über eine zentrale Steuereinrichtung ein Steuerparameter zur Steuerung der internen oder verbundenen, externen Mahleinheit angepasst werden, sodass dann bei einem nachfolgenden Bezug des gleichen Getränks/Produkts oder beim Aufrufen der gleichen Rezeptur, die neben dem Brühprofil ein Mahlprofil oder Mahlparameter für die Mahleinheit umfasst, die Steuerung der Mahleinheit angepasst wird. In erster Linie kann die Mahlzeit variiert werden, während der die Mahleinheit Getränkesubstrat herstellt und/oder ausgibt. Es können aber auch Parameter oder Steuergrößen geändert werden, die dann beispielsweise den Mahlgrad beeinflussen oder verändern.

In dieser Ausgestaltung des Verfahrens kann vorteilhaft auch eine manuelle Befüllung der Brühkammer oder des Siebträgers stattfinden oder eine externe nicht datentechnisch verbundene Mahleinheit verwendet werden, ohne dass es zu einer ungewollten, unbeabsichtigten Erkennung einer maximalen Diskrepanz bezüglich der vorhandenen Getränkesubstratmenge kommt. Denn in einer weiteren, vorteilhaften Ausführungsform kann vorgesehen sein, dass eine Beeinflussung oder Änderung der Steuerung der Mahleinheit oder einer datentechnisch verbundenen, externen Mahleinheit in Reaktion oder in Abhängigkeit des Absolutwerts der Menge des Hydraulikfluids oder der gemessenen Zeit zur Erreichung des Grenzwerts nur erfolgen oder nur stattfinden, wenn zuvor, beispielsweise innerhalb eines Zeitraums von 0s bis 100s zuvor, die Mahleinheit aktiv war oder die Mahleinheit von einer Steuereinrichtung, beispielsweise einer zentralen Steuereinrichtung, aktiviert wurde und/oder eine entsprechende Aktivierung in einem Speicher samt eines entsprechenden Zeitstempel archiviert oder gespeichert wurde. Dadurch wird sichergestellt, dass manuelle Ladungen der Brühkammer oder des Siebträgers oder die Verwendung von nicht datentechnisch verbundenen, externen Mahleinheiten bei der Kompensation oder Korrektur des internen oder datentechnisch verbundenen Mahlwerks unberücksichtigt bleiben.

Eine weitere, besonders wünschenswerte Ausprägung des Verfahrens kann zudem vorsehen, dass in Reaktion auf das Erkennen des Grenzwerts ohne Durchführung eines Aufbrühprozesses, bevorzugt unmittelbar, eine Entspannung des hydraulischen Aktors bewirkt wird, wobei durch die Entspannung des Aktors bevorzugt der verstellbare Brühkopf in eine Ausgangsposition zurückgeführt, insbesondere angehoben, wird. Diese Verfahrensvariante kann besonders vorteilhaft realisiert werden, wenn zuvor durch einen Benutzer oder Bediener ein Doppelbezug für die Herstellung von zwei Getränken aktiviert oder ausgewählt wurde oder über eine andere Benutzereingabe oder Benutzervorgabe es dazu kommt oder es vorhersehbar/absehbar wird, dass eine besonders große Menge an Getränkesubstrat in die Brühkammer oder in den Siebträger eingefüllt, beispielsweise von der Mahleinheit hergestellt und ausgegeben, werden soll.

In einem derartigen Fall kann vorteilhaft vorgesehen sein, dass, beispielsweise bei einer integrierten Mahleinheit, die Mahleinheit zunächst einen ersten Teil oder eine Hälfte des Getränkesubstrats ausgibt, die dann über die automatische hydraulische Vorverdichtung verdichtet wird, bevor dann ein zweiter Teil oder eine zweite Hälfte des Getränkesubstrats ausgegeben oder eingefüllt wird, die dann abermals in einem Vorverdichtungsverfahren verdichtet wird, bevor es zu dem Aufbrüh- oder Auslaugungsprozess kommt. Durch das gestufte oder geteilte Vorverdichten mit zwei, oder mehr, Vorverdichtungsverfahren von jeweils Teilen der Gesamtmenge des Getränkesubstrats kann nicht nur eine größere Menge von Getränkesubstrat in eine Brühkammer oder einen Siebträger mit einem vorgegebenen Volumen eingefüllt werden, sondern es ergibt sich auch eine insgesamt gleichmäßigere Vorverdichtung, da ansonsten bei einer großen Menge von Getränkesubstrat die Vorverdichtung nicht gleichmäßig über die gesamte Höhe oder die gesamte Säule des Getränkesubstrats im Siebträger oder in der Brühkammer wirken kann. Weiterhin entsteht die Möglichkeit eröffnet unterschiedliche Getränkesubstrate für einen Getränkebezug zu verarbeiten. So wäre es grundsätzlich möglich zunächst ein entkoffeiniertes Getränkesubstrat zu verdichten, beim Erreichen des Grenzwerts den hydraulischen Aktor zu entspannen, den Brühkopf zurückzustellen und damit die Möglichkeit zu erhalten ein koffeinhaltiges Getränkesubstrat nachzufüllen oder aufzufüllen, welches dann erneut mit einem hydraulischen Vorverdichtungsverfahren verdichtet wird und erst nach dem zweiten Vorverdichtungsverfahren beim Erreichen des Grenzwerts des Flusses oder der Flussrate eine automatische oder selbstgesteuerte Öffnung eines Brühfluidzuflusses bewirkt und die oben ausgeführten durch die Erreichung des Grenzwerts gegebenenfalls vorteilhaft ausgelösten Steuerungen und Steuerungsanpassungen vorgenommen werden.

Einzelheiten und vorteilhafte Ausgestaltungen des erfindungsgemäßen Verfahrens werden nachfolgend anhand der lediglich schematischen, beispielhaften Zeichnungen erläutert.

Darin zeigen:
- Fig. 1:: beispielhafte zeitliche Verläufe von Flussraten in einem erfindungsgemäßen Verfahren;
- Fig. 2:: ein schematischer Aufbau einer Getränkezubereitungsvorrichtung, die mit einem erfindungsgemäßen Verfahren betrieben wird.

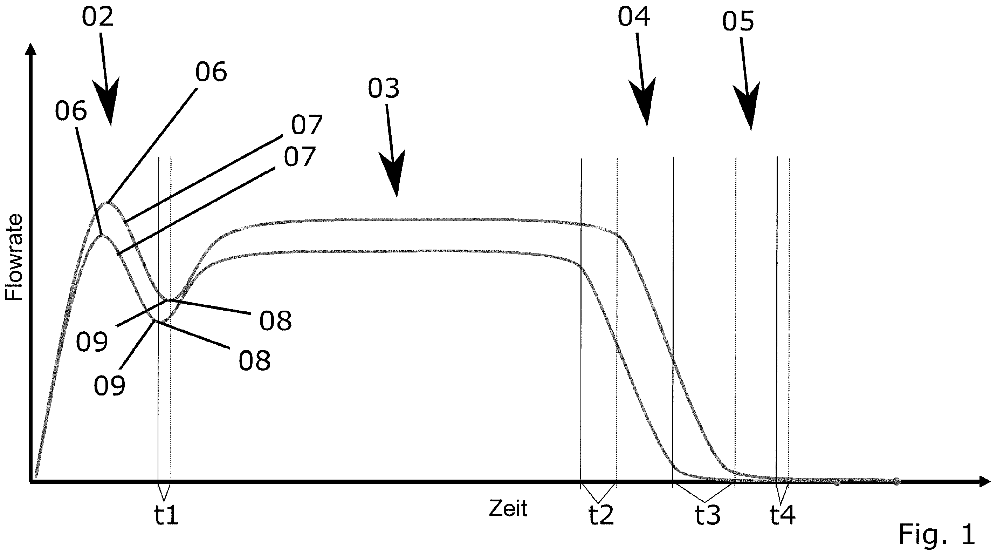

In der Fig. 1 ist die Flussrate bei einem erfindungsgemäßen Verfahren als Funktion der Zeit aufgetragen, wobei die unterschiedlichen Graphen 01 unterschiedliche Brühvorgänge betreffen. Das erfindungsgemäße Verfahren wird bei Getränkezubereitungsvorrichtungen verwendet, die eine hydraulische Vorverdichtungseinheit aufweisen und mit einem hydraulischen Vorverdichtungsverfahren betrieben werden, bei dem ein hydraulischer Aktor, bevorzugt ein Hydraulikzylinder, verfahren wird, um ein Verstellen eines Brühkopfes und das Anpressen eines Brühkopfes auf ein Getränkesubstrat bewirkt wird. Das erfindungsgemäße Verfahren, wie nachfolgend noch im Detail beschrieben werden wird, wird besonders bevorzugt mit Getränkezubereitungsvorrichtungen ausgeführt, bei denen das Hydraulikfluid, zum Betätigen des hydraulischen Aktors während des hydraulischen Vorverdichtungsverfahrens (teilweise) identisch mit dem Brühfluid zum Aufbrühen des Getränkesubstrats ist, wobei zunächst das Hydraulikfluid/Brühfluid in den hydraulischen Aktor, insbesondere den Hydraulikzylinder strömt, das Verstellen des Brühkopfes und das Anpressen des Brühkopfes gegen das Getränkesubstrat bewirkt und nach Abschluss des hydraulischen Vorverdichtungsverfahrens wenigstens teilweise, beispielsweise durch entsprechende fluidtechnische Verbindungen und Steuerungen - bevorzugt über Ventilschaltungen - genutzt wird, um aus dem hydraulischen Aktor auszutreten/abzufließen und das Getränkesubstrat aufzubrühen oder auszulaugen. Entsprechende Vorrichtungen sind im Detail in der Patentanmeldung DE 10 2021 123 545 offenbart.

Der zeitliche Verlauf der Flussrate des Brühfluids/hydraulischen Fluids wird beispielsweise über ein Flowmeter erfasst, welches zwischen einem Frischwassertank oder einem Frischwasseranschluss und einer Brüheinheit der Getränkezubereitungsvorrichtung angeordnet ist. Die zeitlichen Verläufe lassen sich grob in vier Abschnitte unterteilen. Im ersten Abschnitt 02, der bevorzugt bis zu dem Moment t1 andauert, findet das hydraulische Vorverdichten des Getränkesubstrats statt. Im zeitlichen Abschnitt 03, zwischen den Zeitpunkten t1 und t2 erfolgt der Brühvorgang, bei dem Brühfluid mit einem vorgegebenen Brühprofil, welches bevorzugt eine Flussrate oder ein Flussprofil und eine Temperatur oder ein Temperaturprofil vorgibt, in eine Brühkammer eingeführt wird, in der sich das vorverdichtete Getränkesubstart befindet. Im dem dritten Abschnitt 04, zwischen den Zeitpunkten t2 und t3 findet eine Entfeuchtung oder eine Entwässerung des Getränkesubstrats oder Tresters statt. Im vierten oder letzten Abschnitt 05, zwischen den Zeitpunkten t3 und t4 wird der hydraulische Aktor, insbesondere der Hydraulikzylinder zur Verstellung des Brühkopfes entspannt und in seine Ausgangssituation zurückgestellt. Die Rückstellung kann beispielsweise entgegen einer mechanischen Vorspannung, bevorzugt in der Form einer Feder oder Federn, erfolgen.

Im ersten Abschnitt 02 ist zu erkennen, dass die Flussrate des Hydraulikfluids/Brühfluids zunächst ansteigt und nach Anlaufen einer entsprechenden Fördereinrichtung, beispielsweise einer Pumpe, zunächst einen Maximalwert 06 erreicht. Sobald der Brühkopf, beispielsweise eine Stirnfläche des Brühkopfes mit dem Getränkesubstrat in Kontakt kommt und beim weiteren verstellen oder verschieben des Brühkopfes eine Kraft zur Vorverdichtung des Getränkesubstrats auf dieses ausübt, entsteht eine entsprechende Gegenkraft auf den Brühkopf und den hydraulischen Aktor, die dazu führt, dass der Innendruck im Aktor steigt und dementsprechend der Gegendruck auch auf die Pumpe wirkt, was dazu führt, dass die Flussrate während des Vorverdichtungsprozesses abnimmt. Die Abnahme selbst, also beispielsweise die Steigung der Kurve während der Abnahme 07 oder auch lokales Minimum oder ein lokaler Sattelpunkt 08 der Flussrate können als Grenzwert definiert werden, um erfindungsgemäß die Steuerung der Getränkezubereitungsvorrichtung anzupassen oder zu verändern. Der Sattelpunkt 08 ergibt sich in der Regel durch das Öffnen eines Ventils, durch welches Brühfluid/Hydraulikfluid aus dem hydraulischen Aktor zur Vorverdichtung in die Brühkammer abfließen kann. Dadurch wird, beispielsweise bei einem entsprechenden Überdruckventil der Brühprozess automatisch eingeleitet oder gestartet.

Es kommt jedoch bei dem geöffneten Überdruckventil auch zu einem geringen Druckabfall in dem hydraulischen Aktor. Dadurch und durch das Abfließen von Hydraulikfluid/Brühfluid steigt zu Beginn des Abschnitts 03 die Flussrate nach dem Erreichen eines Minimums wieder an, was insgesamt die Ausbildung des Sattelpunkts 08 verursacht. Erfindungsgemäß kann beispielsweise der Sattelpunkt 08 erkannt werden und in Reaktion auf die Erkennung des Sattelpunktes die Steuerung der Getränkezubereitungsvorrichtung angepasst oder geändert werden.

Einerseits kann der Wert des Sattelpunktes oder die Flussrate am Sattelpunktes genutzt werden, um die Steuerung zu ändern oder anzupassen. Alternativ oder zusätzlich kann auch der Zeitpunkt oder die Zeit zu dem der Sattelpunkt 08 erreicht wird, nämlich der Zeitpunkt t₁ erfasst und bei der Anpassung oder Änderung der Steuerung berücksichtigt werden. Beispielsweise kann in Reaktion auf das Erreichen und Erkennen des Sattelpunktes 08 als Grenzwert die Initiierung eines Brühprofils erfolgen, die beispielsweise eine entsprechende Ansteuerung einer Pumpe, beispielsweise mit einer konstanten oder variablen Versorgungsspannung, vorsieht und zur Erreichung einer vorgegebenen Charakteristik der Flussrate in die Brühkammer dient. Weiterhin kann gegebenenfalls in Reaktion auf die Erkennung des Sattelpunktes 08 als Grenzwert und die damit einhergehende Initiierung oder Aktivierung eines Brühprofil als Anpassung der Steuerung der Getränkezubereitungsvorrichtung eine vorgegebene Ansteuerung, insbesondere Spannungsversorgung einer Heizeinrichtung zur Erwärmung des Hydraulikfluids/Brühfluids stattfinden.

Weiterhin kann durch die Erkennung des Wertes des Sattelpunktes 08 und/oder durch Erfassung der Zeit sowie weiterhin alternativ oder zusätzlich aufgrund des Absolutwert des erfassten Flusses bis zur Erreichung des Sattelpunktes 08 auf die Menge an Getränkesubstrats in einer Brühkammer oder einem Siebträger geschlossen werden, so dass dann die Steuerung der Getränkezubereitungsvorrichtung derart angepasst wird, dass die Dauer des Abschnittes 04 zur Entfeuchtung oder Entwässerung des Tresters zwischen den Zeitpunkten t2 und t3 angepasst wird, insbesondere der Zeitpunkt t3 variiert wird. Dabei kann vorgesehen sein, dass für große Mengen an Getränkesubstrat der Abstand zwischen t2 und t3 durch ein Vorverlegen des Zeitpunktes t3 verkürzt wird und umgekehrt bei geringen Mengen an Getränkesubstrat der Zeitpunkt T3 nach hinten verschoben wird. In ähnlicher Weise kann auch das jeweilige Brühprofil anhand der ermittelten/berechneten Menge an Getränkesubstrat angepasst und die Steuerung dementsprechend beeinflusst oder geändert werden.

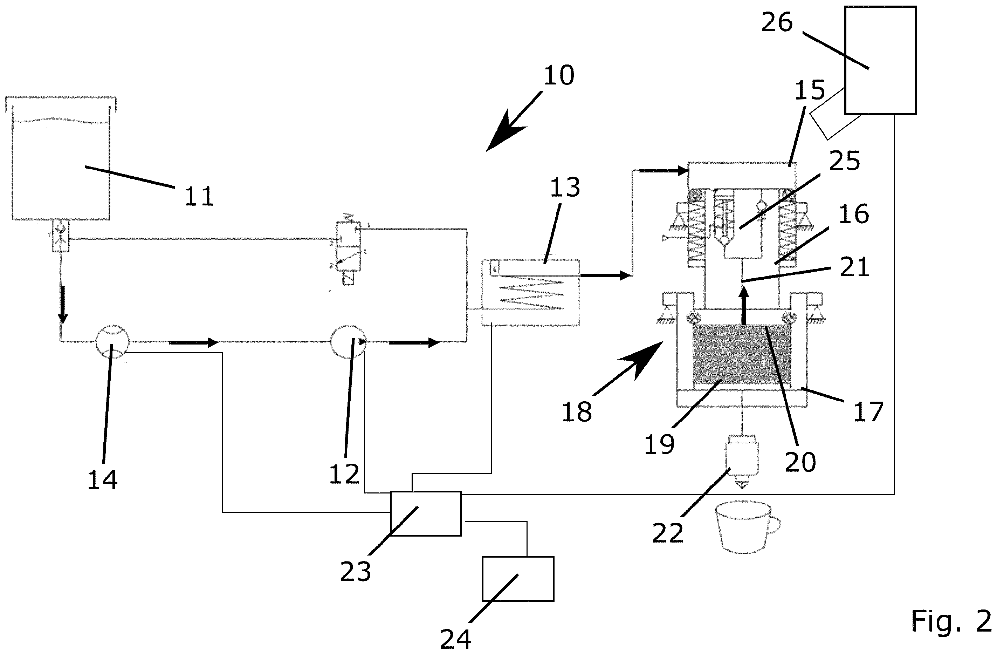

Fig. 2 zeigt eine schematische Darstellung eines Systems oder einer Getränkezubereitungsvorrichtung 10, mit der das erfindungsgemäße Verfahren ausgeführt werden kann oder die mit dem erfindungsgemäßen Verfahren betrieben werden kann.

Die Getränkezubereitungsvorrichtung 10 umfasst einen Vorratsbehälter 11 in dem Frischwasser als Hydraulikfluid und Brühfluid bevorratet ist. Aus dem Behälter 11 kann das Frischwasser über die Pumpe 12 zu einer Heizeinrichtung 13 geführt werden, wobei der Fluss oder die Flussrate durch ein Flowmeter 14 gemessen oder registriert wird. Von der Heizeinrichtung 13 strömt das gegebenenfalls bereits erwärmte Wasser in einen hydraulischen Aktor 15, der beispielsweise als Hydraulikzylinder ausgebildet sein kann. Der hydraulische Aktor 15 ist dazu eingerichtet einen Brühkopf 16 zu Verstellen und insbesondere in eine Brühkammer oder einen Siebträgerhalter 17 einzuführen, um eine Brühkammer 18 zu verschließen und darin befindliches Getränkesubstrat 19 zu verdichten. Der verstellbare Brühkopf 16 umfasst eine Auslass-Stirnfläche 20, die mit dem Getränkesubstrat 19 in Kontakt kommt und dieses innerhalb der Brühkammer 18 verdichtet, sofern im hydraulischen Aktor 15 zunehmend mehr Hydraulikfluid angeordnet ist und dementsprechend ein größerer Innendruck hervorgerufen wird. Ab einem gewissen Überdruck im hydraulischen Aktor 15 wird eine Fluidverbindung 21 zur Brühkammer 18 freigegeben und das Hydraulikfluid/Brühfluid, bevorzugt in der Form von erhitztem Wasser, kann aus dem hydraulischen Aktor 15 in die Brühkammer 18 und von dort über einen Auslass 22 abfließen.

Die Vorrichtung 10 umfasst eine zentrale Steuereinrichtung 23, die mit unterschiedlichen Komponenten der Vorrichtung 10, insbesondere mit einem Speichermittel 24 sowie mit dem Flowmeter 14, der Pumpe 12, der Heizeinrichtung 13 und einer Ventilanordnung 25 des hydraulischen Aktors 15 in der Art und Weise wirkverbunden ist, dass die Steuereinrichtung 23 in der Lage ist aus dem Speichermittel 24 vorgegebene Steuergrößen, Steuerparameter und Steuerprofile zu entnehmen , insbesondere zu laden, und basierend darauf Steuerbefehle oder Steueranweisungen an die wirkverbundenen Komponenten auszugeben und/oder anzupassen. Im erfindungsgemäßen Verfahren kann dementsprechend vorgesehen sein, dass der Fluss oder die Flussrate durch das Flowmeter 14 von der Steuereinrichtung 23 kontinuierlich oder periodisch überprüft/überwacht wird und dabei mit entsprechend vordefinierten Grenzwerten verglichen wird, die beispielsweise im Speichermittel 24 vorgehalten werden können.

Bei Feststellung der Überschreitung oder der Unterschreitung des Grenzwertes oder bei der Detektion eines Sattelpunktes 08 als Grenzwert, kann die Steuereinrichtung 23 abermals entsprechende Steuerungsparameter aus dem Speichermittel 24 laden und die Steuerung initiieren und/oder Steuerparameter anpassen und basierend darauf die Steuerung der Getränkezubereitungsvorrichtung 10 anpassen. So kann beispielsweise beim Erkennen des Sattelpunktes 08 gemäß der Fig. 1 in Reaktion auf die Erkennung des Sattelpunktes 08 ein Brühprofil aus dem Speichermittel 24 geladen werden und damit die Steuerung der Pumpe 12 und/oder der Heizeinrichtung 13 betrieben werden. Dabei kann beispielsweise vorgesehen sein, dass einzelne Parameter des Brühprofils nicht statisch bleiben, sondern abhängig davon sind, wann der Grenzwert erreicht wurde, wie oder in welcher Form der Grenzwert unterschritten oder überschritten wurde, angepasst oder beeinflusst werden.

Weiterhin kann die Steuereinrichtung 23 auch die Steuerung der Ventileinrichtung 25 steuern, um beispielsweise den Zeitpunkt t3 zu variieren, der die Dauer des Entfeuchtungs- oder Entwässerungsabschnitts definiert, da ab oder an dem Zeitpunkt t3 der hydraulische Aktor 15 über die Ventileinrichtung 25 entspannt und der Brühkopf 16 zurückgestellt wird, was dazu führt, dass die Entwässerung/Entfeuchtung beendet wird. Die Steuereinrichtung 23 kann weiterhin auch die Ventileinrichtung 25 so in der Steuerung anpassen, dass in Reaktion auf das Erreichen des Grenzwertes, insbesondere bei einer entsprechenden Überschreitung oder Unterschreitung nach einer hydraulischen Vorverdichten der hydraulische Aktor 15 unmittelbar entspannt wird, um einen Doppelbezug eines Getränks mit entsprechend viel Getränkesubstrat 19 oder eine anderweitig verursachte oder bedingte Aufnahme von zwei oder mehr Chargen von Getränkesubstrat vor dem Initiieren eines Brühvorgangs zu ermöglichen.

Ferner kann die Steuereinrichtung 23 mit einer Mahleinheit 26 wirkverbunden sein und eine Mahlkompensation bewirken, bei der durch das hydraulische Vorverdichtungsverfahren und die Information über das Überschreiten oder Unterschreiten des vorgegebenen Grenzwertes, gegebenenfalls in Verbindung mit anderen Information zum Grenzwert, wie beispielsweise dem Absolutwert des Flusses bei Erreichen des Grenzwertes oder Zeitpunkt t1 bei dem der Grenzwert erreicht, unterschritten oder überschritten wird, dazu genutzt wird, um die Steuerung der Mahleinheit 26 so anzupassen, dass die in der Brühkammer 18 vorhandene Menge an Getränkesubstrat 19 der entspricht, die mit der Mahleinheit ausgegeben und/oder erzeugt werden soll. Diese Anpassung kann sowohl für interne Mahleinheiten 26 also auch für externe, datentechnisch verbundene Mahleinheiten stattfinden. Es kann bei der Anpassung ferner berücksichtigt werden, ob in der jüngsten Vergangenheit, beispielsweise innerhalb der letzten 100s eine Aktivierung einer internen oder externen, datentechnisch verbundenen Mahleinheit stattgefunden hat, um "Fehlanpassungen" bei einer manuellen Beladung oder der Verwendung von externen, nicht verbundenen Mahleinheiten zu verhindern.

### Bezugszeichen

- 02: erster Abschnitt
- 03: zweiter Abschnitt
- 04: dritter Abschnitt
- 05: vierter Abschnitt
- 06: Maximalwert
- 07: Abnahme
- 08: Sattelpunkt
- 10: Getränkezubereitungsvorrichtung
- 11: Vorratsbehälter
- 12: Pumpe
- 13: Heizeinrichtung
- 14: Flowmeter
- 15: hydraulischer Aktor
- 16: Brühkopf
- 17: Siebträgerhalter
- 18: Brühkammer
- 19: Getränkesubstrat
- 20: Auslass-Stirnfläche
- 21: Fluidverbindung
- 22: Auslass
- 23: Steuereinrichtung
- 24: Speichermittel
- 25: Ventilanordnung
- 26: Mahleinheit

- t1: Zeitpunkt
- t2: Zeitpunkt
- t3: Zeitpunkt
- t4: Zeitpunkt

## Patentansprüche

1. Verfahren zum Betrieb einer Getränkezubereitungsvorrichtung (10), insbesondere einer Kaffeemaschine, mit einer hydraulischen Vorverdichtungseinheit zum Verdichten eines Getränkesubstrats (19), bevorzugt Kaffeebohnenmehl, vor einem Aufbrüh- oder Auslaugprozess mit einem Brühfluid, bevorzugt Wasser, bei dem während eines Vorverdichtungsverfahrens ein über einen hydraulischen Aktor (15), bevorzugt Hydraulikzylinder, betätigtes Verstellen eines Brühkopfes (16) erfolgt,
**dadurch gekennzeichnet,**
**dass** während des Vorverdichtungsverfahrens der Fluss oder die Flussrate eines Hydraulikfluids, insbesondere des Brühfluids, zum Verstellen des Brühkopfes (16) gemessen wird und in Abhängigkeit eines vorgegebenen Grenzwertes von dem gemessenen Fluss oder der gemessenen Flussrate eine Steuerung der Getränkezubereitungsvorrichtung (10) angepasst oder verändert wird.

2. Verfahren nach Anspruch 1,
**dadurch gekennzeichnet,**
**dass** der Grenzwert als Untergrenze für einen Fluss oder eine Flussrate definiert ist, und bei der Unterschreitung der Untergrenze die Steuerung angepasst oder verändert wird.

3. Verfahren nach Anspruch 1 oder 2,
**dadurch gekennzeichnet,**
**dass** der Grenzwert als Sattelpunkt (08) des Flusses oder der Flussrate definiert ist und beim Passieren des Sattelpunktes (08) die Steuerung angepasst oder verändert wird.

4. Verfahren nach einem der vorhergehenden Ansprüche
**dadurch gekennzeichnet,**
**dass** in Reaktion auf das Unterschreiten oder Überschreiten des Grenzwertes eine Steuerung einer Pumpe (12) und/oder die Steuerung einer Heizeinrichtung (13) für das Brühfluid geändert wird.

5. Verfahren nach einem der vorhergehenden Ansprüche,
**dadurch gekennzeichnet,**
**dass** während des Vorverdichtungsverfahrens der Absolutwert der Menge oder des Volumens des Hydraulikfluids bis zum Erreichen des Grenzwerts oder die Zeit (t1) bis zum Erreichen des Grenzwerts gemessen wird.

6. Verfahren nach Anspruch 5,
**dadurch gekennzeichnet,**
**dass** in Abhängigkeit des Absolutwerts der Menge oder des Volumens des Hydraulikfluids und/oder der gemessenen Zeit (t1) zur Erreichung des Grenzwerts die Steuerung einer Pumpe (12) und/oder die Steuerung einer Heizeinrichtung (13) für das Brühfluid geändert wird.

7. Verfahren nach einem der Ansprüche 5 oder 6,
**dadurch gekennzeichnet**,
in Abhängigkeit des Absolutwerts der Menge oder des Volumens des Hydraulikfluids und/oder der gemessenen Zeit (t1) zur Erreichung des Grenzwerts eine Steuerung wenigstens eines Ventils, bevorzugt eines Entspannungsventils des hydraulisch verstellbaren Brühkopfes (16), angepasst wird.

8. Verfahren nach einem der Ansprüche 5 bis 7,
**dadurch gekennzeichnet,**
**dass** Abhängigkeit des Absolutwerts der Menge oder des Volumens des Hydraulikfluids und/oder der gemessenen Zeit (t1) zur Erreichung des Grenzwerts eine Steuerung der Entspannung des hydraulischen Aktors (15), bevorzugt über wenigstens ein Ventil, besonders bevorzugt eines Entspannungsventils des hydraulischen Aktors (15), angepasst wird.

9. Verfahren nach einem der Ansprüche 5 bis 8,
**dadurch gekennzeichnet,**
**dass** in Abhängigkeit des Absolutwerts der Menge oder des Volumens des Hydraulikfluids und/oder der gemessenen Zeit (t1) zur Erreichung des Grenzwerts eine Steuerung einer Mahleinheit (26) der Getränkezubereitungsvorrichtung (10) oder einer datentechnisch verbundenen, externen Mahleinheit geändert wird.

10. Verfahren nach Anspruch 9,
**dadurch gekennzeichnet,**
**dass** die Steuerung der Mahleinheit (26) der Getränkezubereitungsvorrichtung (10) oder einer datentechnisch verbundenen, externen Mahleinheit nur geändert wird, wenn in einem vorgegebenen Zeitraum, bevorzugt zwischen 0s und 100s, vor der Erkennung der Unterschreitung oder Überschreitung des Grenzwertes ein Mahlvorgang durchgeführt und/oder dokumentiert wurde.

11. Verfahren nach einem der Ansprüche 1 bis 9,
**dadurch gekennzeichnet,**
**dass** in Reaktion auf das Erkennen des Grenzwerts ohne Durchführung eines Aufbrühprozesses, bevorzugt unmittelbar, eine Entspannung des hydraulischen Aktors (15) bewirkt wird.

## Claims

1. A method for operating a beverage preparation device (10), in particular a coffee machine, comprising a hydraulic pre-compacting unit for compacting a beverage substrate (19), preferably ground coffee, prior to a brewing or leaching process using a brewing fluid, preferably water, in which a brew head (16) is adjusted by a hydraulic actuator (15), preferably a hydraulic cylinder, during a pre-compacting process,
**characterized in that**
during the pre-compacting process, the flow or the flow rate of a hydraulic fluid, in particular the brewing fluid, for adjusting the brew head (16) is measured and a control of the beverage preparation device (10) is adjusted or changed as a function of a predefined limit value of the measured flow or the measured flow rate.

2. The method according to claim 1,
**characterized in that**
the limit value is defined as a lower limit for a flow or a flow rate, and the control is adjusted or changed when the flow or the flow rate drops below said lower limit.

3. The method according to claim 1 or 2,
**characterized in that**
the limit value is defined as a saddle point (08) of the flow or the flow rate, and the control is adjusted or changed when the flow or the flow rate passes the saddle point (08).

4. The method according to any one of the preceding claims,
**characterized in that**
in response to the fact that the flow or flow rate drops below or exceeds the limit value, a control of a pump (12) and/or the control of a heater (13) for the brewing fluid is changed.

5. The method according to any one of the preceding claims,
**characterized in that**
during the pre-compacting process, the absolute value of the amount or of the of volume of the hydraulic fluid needed to reach the limit value or the time (t1) needed to reach the limit value is measured.

6. The method according to claim 5,
**characterized in that**
the control of a pump (12) and/or the control of a heater (13) for the brewing fluid is changed as a function of the absolute value of the amount or of the volume of the hydraulic fluid and/or the measured time (t1) needed to reach the limit value.

7. The method according to any one of claims 5 or 6,
**characterized in that**
a control of at least one valve, preferably a relief valve of the hydraulically adjustable brew head (16), is adjusted as a function of the absolute value of the amount or of the volume of the hydraulic fluid and/or the measured time (t1) needed to reach the limit value.

8. The method according to any one of claims 5 to 7,
**characterized in that**
a control of the relief of the hydraulic actuator (15) is adjusted, preferably via at least one valve, particularly preferably a relief valve of the hydraulic actuator (15), as a function of the absolute value of the amount or of the volume of the hydraulic fluid and/or the measured time (t1) needed to reach the limit value.

9. The method according to any one of claims 5 to 8,
**characterized in that**
a control of a grinding unit (26) of the beverage preparation device (10) or a data-linked external grinding unit is changed as a function of the absolute value of the amount or of the volume of the hydraulic fluid and/or the measured time (t1) needed to reach the limit value.

10. The method according to claim 9,
**characterized in that**
the control of the grinding unit (26) of the beverage preparation device (10) or a data-linked external grinding unit is not changed unless a grinding process has been carried out and/or documented in a predefined period of time, preferably between 0 s and 100 s, prior to the detection of the drop below or the exceedance of the limit value.

11. The method according to any one of claims 1 to 9,
**characterized in that**
in response to the detection of the limit value when no brewing process has been carried out, the hydraulic actuator (15) is relieved, preferably immediately.

## Revendications

1. Procédé de fonctionnement d'un dispositif de préparation de boissons (10), notamment d'une machine à café, comprenant une unité de pré-compactage hydraulique pour compacter un substrat de boisson (19), de préférence du café moulu, avant un processus de fusion ou d'extraction au moyen d'un fluide de fusion, de préférence de l'eau, dans lequel une tête de fusion (16) est ajustée par l'intermédiaire d'un actionneur hydraulique (15), de préférence un cylindre hydraulique, pendant un processus de pré-compactage,
**caractérisé en ce que**
pendant le processus de pré-compactage, le flux ou le débit d'un fluide hydraulique, notamment du fluide de fusion, pour l'ajustement de la tête de fusion (16) est mesuré et une commande du dispositif de préparation de boissons (10) est ajustée ou changée en fonction d'une valeur limite prédéfinie du flux mesuré ou du débit mesuré.

2. Procédé selon la revendication 1,
**caractérisé en ce que**
la valeur limite est définie comme limite inférieure pour un flux ou un débit, et la commande est ajustée ou changée lorsque le flux ou le débit devient inférieur à ladite limite inférieure.

3. Procédé selon la revendication 1 ou 2,
**caractérisé en ce que**
la valeur limite est définie comme point col (08) du flux ou du débit, et la commande est ajustée ou changée lorsque le flux ou le débit passe le point col (08).

4. Procédé selon l'une quelconque des revendications précédentes,
**caractérisé en ce**
**qu'**en réponse au fait que le flux ou le débit devient inférieur ou supérieur à la valeur limite, une commande d'une pompe (12) et/ou la commande d'un chauffage (13) pour le fluide de fusion est changée.

5. Procédé selon l'une quelconque des revendications précédentes,
**caractérisé en ce que**
pendant le processus de pré-compactage, la valeur absolue de la quantité ou du volume du fluide hydraulique nécessaire pour atteindre la valeur limite ou le temps (t1) nécessaire pour atteindre la valeur limite est mesuré.

6. Procédé selon la revendication 5,
**caractérisé en ce que**
la commande d'une pompe (12) et/ou la commande d'un chauffage (13) pour le fluide de fusion est changée en fonction de la valeur absolue de la quantité ou du volume du fluide hydraulique et/ou du temps mesuré (t1) nécessaire pour atteindre la valeur limite.

7. Procédé selon l'une quelconque des revendications 5 ou 6,
**caractérisé en ce**
**qu'**une commande d'au moins une vanne, de préférence une soupape de détente de la tête de fusion (16) hydrauliquement ajustable, est ajustée en fonction de la valeur absolue de la quantité ou du volume du fluide hydraulique et/ou du temps mesuré (t1) nécessaire pour atteindre la valeur limite.

8. Procédé selon l'une quelconque des revendications 5 à 7,
**caractérisé en ce**
**qu'**une commande de la détente de l'actionneur hydraulique (15) est ajustée, de préférence par au moins une vanne, de préférence particulière une soupape de détente de l'actionneur hydraulique (15), en fonction de la valeur absolue de la quantité ou du volume du fluide hydraulique et/ou du temps mesuré (t1) nécessaire pour atteindre la valeur limite.

9. Procédé selon l'une quelconque des revendications 5 à 8,
**caractérisé en ce**
**qu'**une commande d'une unité de mouture (26) du dispositif de préparation de boissons (10) ou d'une unité de mouture externe en communication par données est changée en fonction de la valeur absolue de la quantité ou du volume du fluide hydraulique et/ou du temps mesuré (t1) nécessaire pour atteindre la valeur limite.

10. Procédé selon la revendication 9,
**caractérisé en ce que**
la commande de l'unité de mouture (26) du dispositif de préparation de boissons (10) ou d'une unité de mouture externe en communication par données est changée à condition qu'un processus de mouture a été effectué et/ou documenté pendant une période prédéfinie, de préférence entre 0 s et 100 s, avant la détection que la valeur limite n'a pas été atteinte ou a été dépassée.

11. Procédé selon l'une quelconque des revendications 1 à 9,
**caractérisé en ce**
**qu'**en réponse à la détection de la valeur limite quand aucun processus de fusion n'a été effectué, l'actionneur hydraulique (15) est détendu, de préférence immédiatement.
